(19) Europäisches Patentamt
European Patent Office
Office européen des brevets

(11) EP 4 265 696 A1

(12) EUROPEAN PATENT APPLICATION
published in accordance with Art. 153(4) EPC

(43) Date of publication:
**25.10.2023 Bulletin 2023/43**

(21) Application number: **21909607.0**

(22) Date of filing: **20.12.2021**

(51) International Patent Classification (IPC):
***C09D 183/00*** *(2006.01)* ***C08G 77/18*** *(2006.01)*

(86) International application number:
**PCT/ES2021/070908**

(87) International publication number:
**WO 2022/136711 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.12.2020 ES 202031279**

(71) Applicant: **Universidad de Cádiz**
**11003 Cádiz (ES)**

(72) Inventors:
- **LUNA AGUILERA, Manuel**
  **11510 Cádiz (ES)**
- **ZARZUELA SÁNCHEZ, Rafael**
  **11510 Cádiz (ES)**
- **MOSQUERA DÍAZ, María Jesús**
  **11510 Cádiz (ES)**

(74) Representative: **Pons**
**Glorieta Rubén Darío 4**
**28010 Madrid (ES)**

(54) **PRODUCT FOR PROTECTING CONCRETE AND OTHER POROUS CONSTRUCTION MATERIALS**

(57) The present invention relates to a product that can be used to protect concrete and other construction materials, which is able to waterproof or super waterproof the material to be treated. The product is able to penetrate into substrates with nanometric pores. The mixture is produced by simply mixing, using ultrasound, an oligomeric ethyl silicate, an alkyl triethoxysilane, a polydimethylsiloxane and n-octylamine. When required, particles are added to provide the product with super water-repellent properties.

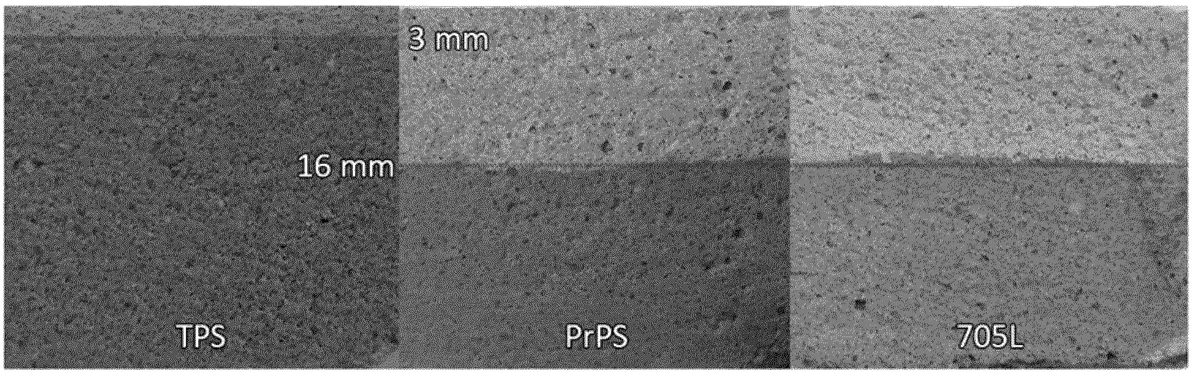


FIGURE 1

EP 4 265 696 A1

## Description

### SECTOR OF THE ART

The present invention relates to a set of products which, with a common base - oligomeric ethyl silicate, an alkyl triethoxysilane, a polydimethylsiloxane and n-octylamine- are able, through slight modifications in the synthesis thereof, to be applied as hydrophobic treatments and superhydrophobic treatments (waterproofing and water repellent) in building materials. These products have the ability to penetrate porous structures of nanometric size, as is the case of concrete and other building materials.

### BACKGROUND OF THE INVENTION

Treatments for concrete protection are classified, according to standard EN 1504-2:2005, in 3 categories:

1. Coatings, forming a layer on the surface.
2. Impregnation treatments, penetrating into cracks and into the porous structure of the substrate.
3. Hydrophobic impregnation treatments, acting in the same way as impregnation treatments and, furthermore, preventing the penetration of liquid water, preserving vapor permeability.

In the year 2005, the research group of the present invention designed a strategy for the synthesis of products for the restoration and protection of construction materials that solves the main problem of commercial products based on alkoxysilanes, their tendency to form brittle gels that fracture during drying, as a consequence of the high capillary pressures generated. The addition of a surfactant in the synthesis allows obtaining a nanomaterial with uniform pore size and free of fractures due to two reasons:

1. The surfactant increases the pore radius of the gel, reducing the capillary pressure responsible for the fracture of the material.
2. The reduction in surface tension caused by the surfactant also decreases the capillary pressure value.

This process was the subject of a patent (ES2265298) and a publication in 2008 *(*Mosquera MJ, de los Santos Valdez-Castro, L, Montes, A, Langmuir, 24, 2772, 2008*).*

Subsequently, this synthesis has been modified incorporating new components to create treatments that provide additional properties to building materials. The use of a polymeric silica precursor and a polydimethylsiloxane (PDMS) with terminal OH groups in the presence of the surfactant. Co-condensation of the silica precursor and PDMS produces a fracture-free hybrid organic-inorganic mesoporous gel. The organic component (PDMS) increases the flexibility of the gel, reducing the risk of fractures. Furthermore, the methyl groups of the PDMS are integrated into the silica polymer, providing it with hydrophobic properties. In several publications it has been shown that this product increases the mechanical strength of treated substrates and furthermore creates a hydrophobic coating on the treated material *(*J.F. Illescas, M.J. Mosquera, J. Phys. Chem. C. 115 (2011) 14624-14634*).*

A second modification of the product consisted of the addition of silica nanoparticles, which are deposited on the surface of the treated material, changing its roughness. This roughness together with the PDMS creates a coating on the building material that causes the water droplets to be in a Cassie-Baxter state. In this sense, the treated surface is highly repellent and therefore has superhydrophobic properties *(*D.S. Facio, M.J. Mosquera, ACS Appl. Mater. Interfaces. 5 (2013) 7517-7526*).* These products have also been the subject of an invention patent (ES2423356 B2).

The hydrophobic and superhydrophobic treatments developed by the group of the present invention penetrate into the interior of the substrate, reaching, in the case of natural stone, depths of up to 10-20 mm. However, treatments based on silica precursors, in general, present penetration problems in concrete and other cementitious construction materials. This is due to two reasons: (i) most of the pores in cementitious substrates are in the nanometric range, making it difficult for the sol to enter through the porous structure, and (ii) the basic nature of the cementitious substrate accelerates the sol-gel process practically instantly, hindering the penetration of the sol into the substrate.

For these reasons, although the previous hydrophobic and superhydrophobic treatments are highly effective on concrete and cement mortars, hydrophobic properties are only observed at a maximum depth of penetration of 3 mm, allowing them to be included in the category of hydrophobic impregnation treatments. Nevertheless, the aforementioned rule also classifies hydrophobic impregnation treatments into two categories based on their depth of penetration into the concrete. Class I treatments have penetrations of less than 10 mm while class II treatments have a penetration greater than 10 mm. In this sense, the limited penetration of the products of the present invention in the concrete (3 mm) means that they can only be categorized as class I, which places them in an unfavorable position compared to the market where there are class II hydrophobic impregnation products.

**DESCRIPTION OF THE INVENTION**

The present invention relates to a product which, applied to a porous construction material, is able to spontaneously polymerize in its pores, forming a crack-free nanomaterial, which gives the treated material hydrophobic o superhydrophobic properties. In addition, in the case of concrete and other cementitious materials, these products present a depth of penetration between 4 and 5 times greater than that of those developed in patent ES2388843.

The product contains the following components:

- An oligomeric ethyl silicate (CAS: 11099-06-2) that generates 40-42% silica after complete hydrolysis, in a proportion of 40-60% by volume.

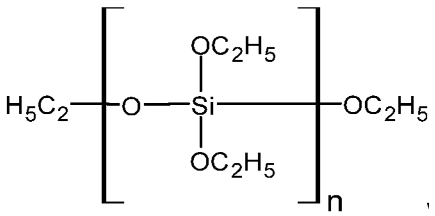

where n is typically 5

This silicate produces silica that is capable of interacting with the components of the substrate, ensuring the affinity and therefore the durability of the treatment. In the specific case of cementitious materials, it has recently been shown that it can react with portlandite, producing hydrated calcium silicate, one of the main components of cement and responsible for its mechanical properties *(*R. Zarzuela, M. Luna, L.M. Carrascosa, M.P. Yeste, I. Garcia-lodeiro, M.T. Blanco-varela, M.A. Cauqui, J.M. Rodríguez-izquierdo, Cem. Concr. Res. 130 (2020) 106008*).*

- An alkyl triethoxysilane with a short alkyl chain of 3 to 8 carbons in a proportion of 30-50% by volume.

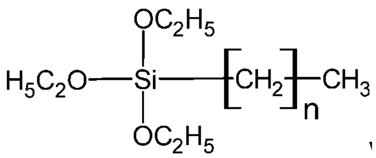

where the value of n can range from 2 to 7

This compound is able to react with oligomeric ethyl silicate, both forming a three-dimensional silica network with hydrophobic characteristics thanks to the alkyl groups introduced into the structure. As it is a monomer, it has a smaller molecular size than polydimethylsiloxane chains, which facilitates its penetration into the substrate. In addition, by forming, only 3 Si-O-Si bonds, due to the presence of the alkyl group, it reduces the crosslinking of the silica network, decreasing the rigidity of the material, increasing its resistance against possible deformations. Furthermore, the integration of alkyl triethoxysilane in the product reduces its viscosity, decreases its reactivity and increases its surface tension compared to products that do not include it. These changes in the properties of the product favor penetration into the substrate.

- A hydroxyl-terminated polydimethylsiloxane (PDMS) (CAS: 70131-67-8) with a molecular weight between 2000 and 5000 Da with chains ending in hydroxyl groups in a proportion of 10-20% by volume.

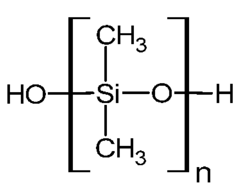

where the value n must be in the range between 25 and 70 PDMS can react with the previous components, integrating into the structure and giving it a hydrophobic character due to the presence of methyl groups. Its greater molecular size and reactivity allow it to accumulate on the surface and the first few millimeters of the material, improving the hydrophobic properties of the surface of the treated material.

- Water, which is necessary to hydrolyze the ethyl silicate and the alkyl triethoxysilane. Its concentration must be less than or equal to 0.15% by volume to ensure that the product remains stable in a closed container and that, when

exposed to air, its gelling time is long enough to be applied and penetrate into the substrate. The exact amount of water must be adjusted depending on the formulation of the product and, if necessary, it can be removed from the product (in this case the ambient humidity is sufficient for the product to react).

- n-octylamine ($C_8H_{19}N$ CAS: 111-86-4), acting as a basic catalyst of the sol-gel reaction and preventing cracking of the product. Like water, its concentration should not exceed a certain percentage by volume, in this case 0.08%, to ensure the correct stability of the product.

Additionally, the product may contain:

- Particles with a content in SiOz of more than 80%, this particles incorporated in the product remain deposited on the treated surface, modifying its roughness and increasing water repellency. Particles mainly composed by SiOz can interact with the product and are inert to the external environment. The average size of the particles must be in the range of 0.040 to 1 μm and their concentration must be between 2 and 5% by weight with respect to the total volume of the rest of the components. The exact size and concentration of the particles will depend on the characteristics of the substrate to be treated. Examples of particles that meet these requirements are silica nanoparticles, silica fume or micronized quartz.
- Solvent, the product can be dissolved if necessary to modify some of its characteristics, such as stability or viscosity in specific applications. This solvent must be completely miscible with the product and not alter its effectiveness, for example isopropanol or hexane. The solvent/product volumetric ratio should not exceed 50% to ensure a sufficient amount of active components in the mixture.

The general process of preparing the product consists of the mixture of all its components, except water and n-octylamine, in a vessel. This mixture is homogenized by means of ultrasonic stirring for 10 minutes, during the mixing time, the water and n-octylamine are added. At this point, the product is ready to be applied on the substrate using common methods such as a brush, roller or spray. If application is not immediate, the product must be stored in a bottle that ensures proper insulation from the air.

It is important to highlight that these products present a significant innovation with respect to the previous patent of the research group, ES2388843*,* since the design of the patented product has been carried out considering the significant parameters in the penetration of a sol (liquid) into a porous material. This penetration can be extrapolated to the capillary flow of a liquid through an aggregate of parallel cylindrical tubes, calculated by the Washburn equation (see below)

$$L=\sqrt{((\gamma r t \cos(\phi))/2\eta)}$$

where L is the penetration depth of the liquid, γ is the surface tension of the liquid, r the radius of the pores, t the penetration time, ϕ the contact angle of the liquid with the solid and η the viscosity of the liquid.

According to the equation, the increase in liquid penetration depends on three factors: (i) reduction of the viscosity of the sol; (ii) increase in surface tension, and (iii) increase in gelling time. The gelling time is directly related to the time that the product remains in a liquid state and, therefore, is able to flow through the pores of the material.

The combination of an alkyl triethoxysilane and a polydimethylsiloxane ensures, as will be explained in Example 1, obtaining an improvement in the three indicated variables, increasing its ability to penetrate into the substrate.

Furthermore, as will be explained in later examples, the products of the invention give the treated substrate a high water repellency, substantially reduce water absorption and protect the material against exposure to environmental conditions, even in aggressive situations, all this inducing color changes in the substrate that are imperceptible to the human eye.

**DESCRIPTION OF THE FIGURES.**

**FIGURE 1.** Photographs of the cross-sections of the treated samples showing the depth of penetration of the different products.

**FIGURE 2.** Evolution of the mass of water absorbed by the samples during the water absorption immersion test.

**FIGURE 3.** Evolution of the loss of mass experienced by the samples during the salt crystallization test.

**FIGURE 4.** Photographs of the state of the samples after cycle 15 of the salt crystallization test.

**EMBODIMENTS OF THE INVENTION.**

The synthesis process of the product object of the present invention includes the following steps:

1. A mixture is prepared using the required volumes, according to the proportions mentioned above, of ethyl silicate, alkyl triethoxysilane and PDMS.
During this step, it is possible to add to the mixture silicon compounds, the particles that increase the roughness of the treated surface or the solvent that is required to modify the final characteristics to the product.
2. The mixture is homogenized by ultrasonic stirring for 10 minutes. Once the stirring has started, the water (if necessary) and the n-octylamine are added.
3. The next step of the process is the application of the prepared product on the material to be treated. The product can penetrate inside the substrate by impregnating the surface by means of spraying, a brush or a roller. For small objects, by immersion in a tank containing the product, or by capillary rise by means of surface contact of the product and the underside of the object.
If the product is not going to be applied immediately, it must be stored in a bottle that correctly seals it from contact with air.
4. After application, the co-condensation of the silicon compounds takes place, *in situ,* in the substrate, forming a three-dimensional hybrid structure of silica functionalized with organic groups. In the event that particles are included, these are integrated into the coating that forms the product on the surface of the substrate, modifying its roughness and, therefore, generating a Cassie-Baxter state that produces a phenomenon of water repellency.

Next, and in order to illustrate in more detail the products object of the patent and their advantages over products previously developed by the group, results obtained in the research laboratory are described. Specifically, Example 1 describes the synthesis processes and characterizes the products. In example 2, the prepared products and a commercial product are applied in cement mortars and their depth of penetration is determined. Cement mortar was selected as the study substrate because it has the same characteristics that make it difficult for products to penetrate concrete, small pores and high basicity, and furthermore, it has the advantage that it allows preparing homogeneous samples on a laboratory scale. In example 3, the waterproofing and water repellent properties of the products applied in the cement mortar samples are evaluated. In example 4, the durability of the treatments is evaluated.

**EXAMPLE 1**

Three products were prepared:

1. TPS, a product contemplated in earlier patent no. ES2388843, which has proven to be a versatile treatment capable of providing superhydrophobic properties to a multitude of construction materials.
2. PrP, a hydrophobic product object of this patent.
3. PrPS, a superhydrophobic product object of this patent.

The specific components used in the synthesis of the products were the following:

- Oligomeric ethyl silicate, SILICATE TES 40 WN from Wacker, which generates 41% silica after its complete reaction and the average chain size of which is 5 units is used, this component will hereinafter be referred to as TES40.
- Polydimethylsiloxane, FINISH WS 62 M from Wacker was used, with a viscosity of about 60 mPa s, an average degree of polymerization of 58 and an approximate molecular weight of 4300 Da and the chain ends of which end in hydroxyl groups to ensure co-condensation with the rest of the components, referred to as PDMS.
- Alkyl triethoxysilane, Dynasylan PTEO, a propyl triethoxysilane with a purity of 97%, was selected, hereinafter referred to as PTEO.
- Particles, Aerosil® OX50 silica nanoparticles from Evonik, with an average size of 40 nm and a specific surface area of 50 $m^2 \cdot g^{-1}$, were used, referred to as OX50.
- n-octylamine, from Sigma-Aldrich with a purity of 99%.

For the synthesis of 500 ml of TPS, 450 ml of TES40, 50 ml of PDMS and 10 g of OX50 were mixed together. The mixture was subjected to ultrasonic stirring for 10 minutes using an ultrasonic probe with a maximum power of 200 W, equipped with a 13 mm tip and operating at 74% amplitude. Once stirring started, 750 $\mu$l of water and 400 $\mu$l of n-octylamine were added.
Syntheses of PrP and PrPS were performed using the same process except that the 450 ml of TES40 were replaced by 225 ml of TES40 and 225 ml of PTEO. The difference between these products is that OX50 was not used

in the synthesis of PrP.

After the synthesis, the viscosity of the products was calculated at 25 °C using a rotational viscometer. The surface tension was determined by the pendant drop method using contact angle video measurement equipment, and about 10 ml of the products were deposited in Petri dishes that were exposed to laboratory conditions to determine gelling times. The obtained values are shown in Table 1.

**Table 1.** Values of viscosity, surface tension and gelling time determined for the synthesized products.

| Product | Viscosity (mPa·s) | Surf. tension (mN/m) | Gel time (h) |
|---|---|---|---|
| TPS | 6.4 | 20.3 | 5 |
| PrP | 1.5 | 26.3 | 16 |
| PrPS | 1.6 | 26.2 | 16 |

The incorporation of PTEO (PrP and PrPS) produced drastic changes in the product compared to the original formulation (TPS). The viscosity was reduced from 6.4 to 1.5 and 1.6 mPa s, respectively, which increased the fluidity of the product, favoring its penetration into the interior of the porous structure of the substrate. The surface tension increased by 30%, increasing the penetration of the liquid by capillarity action. The gelling time was practically tripled, increasing the time the product remains in the liquid state, and, therefore, its flow time through the pores of the material. Precisely these three parameters play a role in the Washburn equation, as described in the previous section. If the Washburn equation is applied considering the penetration of the two products into a porous material, the following is true:

- The values of viscosity and surface tension of both products are known.
- The pore radius is an intrinsic parameter of the material.
- Penetration time is unknown, but by using extrapolation considering the gel times, TPS would penetrate for a time of 5t while PrP and PrPS could penetrate for a time of 16t.
- Taking into account the similar nature of liquids and the fact that their values of surface tension are not very far apart, the cosine of this angle can be considered to be very similar for both products.

With all this in mind, it is possible to agglomerate all the unknown but common parameters for both cases of penetration as a constant that will be called C. In this way, $L_{TPS}$=2.8C, $L_{PrP}$=11.84C and $L_{PrPS}$=11.45C, or in other words, the depths of penetration of PrP and PrPS would be about 4 times greater than that of TPS. Naturally, this is an estimate since the products are not simple liquids but are sols that react with themselves and the substrate, transitioning to a gel state. This process is known as sol-gel transition and the progressive change of state of the product means that its properties are not constant. However, even though the penetration of the product cannot accurately be determined, the data indicates that the change in the properties of the product acts in the direction of increasing its penetration.

**EXAMPLE 2**

The products TPS, PrP, PrPS and the 705L commercial class II hydrophobic impregnation treatment from Sika were applied to cement mortar samples having dimensions of about 4x4x4 cm. These samples were prepared using Portland cement CEM II/BL 32.5 R, fine construction sand (maximum grain thickness less than 4 mm) and proportions by weight of cement:sand:water of 1:2:0.6. The mixture was deposited in 24x8x4 cm molds that were demolded after 24 hours, and the mortar blocks were cured under saturated humidity conditions for 28 days, regularly spraying water on the blocks. After this time, the blocks were cut to obtain the samples with the required dimensions, washed using distilled water and dried for 24 hours at 60 °C in an oven.

First, the depth of penetration of the treatments was determined according to an adaptation of standard EN 1504-2:2005. The products were applied to the mortar samples by capillarity, keeping one side of the samples submerged 1 mm for 4 minutes in a container containing the product. Next, the amount of product absorbed was determined by weighing the samples, with consumptions being 0.40, 1.17, 1.11 and 1.08 kg·$m^2$ for TPS, PrP, PrPS and 705L, respectively. Taking into account the densities of said products, 0.37, 1.16, 1.09 and 1.23 l·$m^2$ for TPS, PrP, PrPS and 705L, respectively, it is confirmed that PrP and PrPS have much higher consumptions than TPS, which is directly related to greater penetration, with consumption thereof being very similar to that of the commercial product that is certified as a high penetration treatment for concrete.

One week after the application of the products, the samples were cut transversely and the cross-sections were wetted to observe the depth of penetration (see Figure 2). In this sense, it was determined that the depth of penetration for the TPS product was 3 mm while PrPS and PrP penetrated 16 mm, like the reference commercial product. Therefore,

it is confirmed that the changes in the formulation of the product introduced in this patent improve the depth of penetration of the product in the substrate until reaching values similar to the high penetration commercial product.

**EXAMPLE 3**

The three products used in the previous example were applied again to samples of the same type of cement mortar. In this case, the products were applied to the six faces of the 4x4x4 cm cubes by a brush to simulate the application that could be made, *in situ,* on a construction material. The samples were allowed to dry for two weeks and were evaluated.

First, the color change induced by the treatments was determined, for which the changes in the chromatic coordinates of the CIEL*a*b* space were determined using a colorimeter and using the illuminant C and observer 10°. The color variation experienced after the treatments was quantified by means of the total color difference parameter, ΔE* (UNE EN 15886:2010) according to the following equation:

$$\Delta E^* = \sqrt{\Delta L^{*2} + \Delta a^{*2} + \Delta b^{*2}}$$

**Table 2.** Color changes (ΔE*), static contact angles (SCA), hysteresis and percentage reduction of water absorption by immersion for the treated samples. Include data for the one without particles.

| Sample | ΔE* | SCA (°) | Hysteresis (°) | % reduction abs. |
|---|---|---|---|---|
| TPS | 3.8 | 151.0±4.2 | 3.4±0.8 | 73 |
| PrP | 2.6 | 145,6±4,5 | 10±2.2 | 80 |
| PrPS | 3.2 | 147,5±4,3 | 2.9±1.3 | 82 |
| 705L | 1.8 | 144,9±5,3 | 12.2±2.8 | 79 |

The registered color change (see Table 2) for TPS is less than 5, which is usually considered acceptable for applications where it is desired to preserve the original appearance of the substrate *(*J.D. Rodrigues, A. Grossi, J. Cult. Herit. 8 (2007) 32-43*).* In the case of PrPS, the color change was reduced, being close to 3, a value that is practically imperceptible and is considered not to imply a compatibility risk for the substrate. For PrP, the color change is even somewhat lower, which is related to the absence of particles in this product, since its accumulation on the surface can produce a slight whitening.

The hydrophobic effectiveness of the products was evaluated by means of measuring static contact angles and advancing and receding dynamic angles, using video measurement equipment (the results are recorded in Table 2). Angles greater than 90° mean that the surface has hydrophobic properties, so the angles close to 150° for TPS, PrP and PrPS indicate that the treatments provide a high hydrophobic capacity. The static angles allow characterizing the hydrophobic capacity of the product, but to evaluate the repellent capacity it is necessary to determine the advancing and receding dynamic contact angles. To that end, a volume of liquid is injected into the drop initially deposited so that it will grow and its contact surface with the sample will be modified. The maximum contact angle observed during this process is called the advancing angle and is related to liquid-solid cohesion. Next, the volume of the drop is removed and, conversely, the volume of the drop decreases and the contact surface of the drop with the surface should decrease. The minimum contact angle measured during this cycle is referred to as the receding angle and is related to liquid-solid adhesion. The difference between these two angles is called hysteresis, and it is a measure of the force required to move the water over the surface. Values of hysteresis less than 10° imply the free mobility of the drop on the surface, and the existence, therefore, of repellency on the analyzed surface. TPS and PrPS show hysteresis close to 3°, indicating high water repellency.

The condition of superhydrophobicity is quantified by the existence of both cases, of static angles greater than or equal to 150° and hysteresis less than 5°. Therefore, according to the experimental results obtained, PrPS shows superhydrophobic properties, like the previously developed superhydrophobic product, TPS. Moreover, both PrP and the commercial product present high static angles (see Table 2), but their hysteresis is high. This translates into reduced water repellency and, therefore, they are hydrophobic agents that lack superhydrophobic properties. This is due to the lack of particles in the composition thereof, the modification of surface roughness necessary to produce the Cassie-Baxter state does not occur.

The protection offered by treatments against prolonged contact with water was evaluated by means of a water absorption immersion test. To that end, the treated samples were submerged in a container with water for 168 hours, calculating their percentage increase in mass with respect to the initial weight. This increase in mass is due to the water

absorbed by the sample and is depicted in Figure 3. The untreated sample shows rapid absorption, retaining 9% of water after one hour of immersion, while treatments considerably reduce this rate of water ingress, keeping it below 1%. After prolonged immersion, the untreated sample reaches 10% of water uptake, while treated samples remain below 3%, which represents the reductions in the amount of water absorbed that are shown in Table 2. Therefore, the products PrP and PrPS offer good protection of building material against water with a slightly higher effectiveness than TPS and a performance similar to the commercial product.

**EXAMPLE 4**

Lastly, samples treated with the product PrPS were subjected to durability tests to demonstrate that they withstand environmental exposure conditions and protect the substrate against aggressive conditions. To compare the results, untreated samples and samples treated with the product TPS and the commercial product 705L were used. Many treatments frequently used in construction materials are based on resins or other organic compounds that are susceptible to being altered by UV irradiation and, therefore, they can change upon exposure to the environment and sunlight. To that end, the cement mortar samples (treated according to the previous example) were subjected to a UV irradiation of 10 W/m$^2$ from black light fluorescent lamps for 1000 hours. First, the color change experienced by the samples after exposure was determined, said values being shown in Table 3, since it is well known that some treatments tend to yellow under these conditions. The changes in the color of the samples under study were less than 3 and therefore imperceptible to the human eye. This is because the treatments contain silica compounds that are inert to UV radiation. If the changes in the chromatic coordinates are analyzed, it is observed that these are close to the values corresponding to the untreated substrate, therefore, the observed color change is due to the fact that 2 months have elapsed since the application of the products and they have continued their drying process. When calculating the color changes of the samples with respect to the untreated mortar, a general reduction of such changes is observed with respect to those calculated two weeks after application. In the case of PrPS, the change is below 2 and becomes imperceptible to the naked eye (A. Callia, M. Lettieri, M. Masieri, S. Pal, A. Licciulli, V. Arima, J. Clean. Prod. 165 (2017) 1036-1047*)*.

**Table 3.** Color changes (ΔE*), static contact angles (SCA) and hysteresis for the treated samples after ultraviolet exposure.

| Sample | ΔE* | SCA (°) | Hysteresis (°) |
|---|---|---|---|
| TPS | 3.0 (3.0) | 150±3.7 | 0.9±0.3 |
| PrPS | 2.2 (1.9) | 154.3±2.8 | 0.3±0.2 |
| 705L | 2.5 (0.8) | 134±2.6 | 11.5±1.9 |

The hydrophobic properties of the samples were evaluated again after UV exposure and the values obtained are shown in Table 3, since this characteristic depends on the organic groups that functionalize the silica and are susceptible to being altered. As with the color, changes were observed from the previous measurement that could be attributed to the lapsing of two months from the application and to the fact that the products have finished their drying process. The contact angles of TPS remained unchanged while for PrPS they increased slightly, which is in line with the lower reactivity of the product PrPS, confirming that it needs more time to dry and achieve the maximum contact angle. As for the hysteresis, this is considerably reduced for both products, especially for PrPS, reaching an average value of 0.3°, which implies an excellent superhydrophobic capacity. Regarding the commercial product, its contact angle and therefore, its waterproofing capacity, are reduced, which could be due to the fact that organic groups of the product that were not hydrolyzed have been lost over time.

Lastly, to confirm the durability of the treatments, the samples were subjected to an accelerated aging test by salt crystallization in accordance with standard UNE-EN 12370. For cement, this test is especially aggressive since drying at high temperatures also implies the alteration of the mortars by drying and humidity cycles. Figure 4 shows the weight changes of the samples during the test. After the first cycle, it was observed how all the samples suffered a slight decrease in mass, which remained practically constant during the first 5 cycles of the test. This rapid drop in mass, with no damage being observed, is due to the loss of hydration water from the material in the drying process and is greater for the treated samples because the immersion in the solution and the high temperature favor hydrolysis and the release of organic groups that remain unreacted in the treatment. After cycle 5, the untreated sample begins to increase in weight, which indicates that the salts are entering in its interior, and after the seventh cycle, the mass begins to decrease rapidly, while significant damage is observed. In contrast, the decrease in mass for the treated samples remains at values very close to the initial ones, confirming that salts do not penetrate the substrate, and no noticeable damage was observed.

Figure 5 shows the state of the samples after cycle 15. While no changes are observed in the treated samples, untreated samples have been considerably altered. A considerable amount of material has been lost, especially in the vertices and edges of the cubes. Furthermore, the surfaces are easily disintegrated and the color thereof has gone from gray to brown. After this evaluation, the samples were washed by immersion in distilled water to remove the salts and dried to proceed to their characterization, the results of which are shown in Table 4.

**Table 4.** Percent mass loss (-$\Delta$m), color changes ($\Delta$E*) and percentage decrease in ultrasound pulse speed for the treated samples after the salt crystallization test.

| Sample | -$\Delta$m (%) | $\Delta$E* | Ultrasounds (%) |
|---|---|---|---|
| Untreated | 9.5 | 5.6 | 8.9 |
| TPS | 1.4 | 0.7 | 0.0 |
| PrPS | 1.4 | 1.5 | 0.2 |
| 705L | 1.3 | 1.7 | 1.7 |

After washing, the average weight loss of the untreated samples was 9.5 %, while for the treated ones it was less than 1.5 %. This means that the treatments prevented mass loss by more than 85%, so the treatments are durable and offer high protection for the substrates, especially when considering that the slight mass losses of the treated samples are mainly due to changes in their degree of hydration and the drying of the product. It is also confirmed that the color change experienced by the untreated sample is greater than 5, while for the treated samples it is less than 2 and, therefore, imperceptible.

Lastly, to evaluate in depth the damage caused to the samples by the salt test, the speed of propagation of ultrasound pulses in the samples was measured, since the decrease in this characteristic is related to a decrease in the mechanical properties of the material. In this sense, it is confirmed that the untreated sample suffers considerable damage, while the samples treated with the products developed in the laboratory remain unaltered, offering a protection that is superior to that of the commercial product that exhibits a small decrease in the speed of the ultrasound pulse.

**INDUSTRIAL APPLICABILITY**

The products that are the object of the present invention can be used as treatments for protecting concrete and other porous cbuilding materials. Specifically, the new product provides hydrophobic or super hydrophobic properties to porous construction materials and furthermore has a depth of penetration greater than 10 mm, being classified as class II hydrophobic impregnation treatments. In addition, a product that gives the surface hydrophobic and water-repellent properties (superhydrophobic), maintaining the penetration capacity described above, can be prepared.

The products can be applied, *in situ,* by means of spraying, a brush or any other process, the polymerization reaction and interaction with the substrate occurring spontaneously and without the need for any additional extraction, vacuum or heating treatment.

**Claims**

**1.** A product for protecting concrete and any other porous building material, **characterized in that** it consists of a stable sol obtained by ultrasonic stirring composed of:

- an oligomeric ethyl silicate in a proportion of 40-60% by volume,
- an alkyl triethoxysilane with an alkyl chain of 3-8 carbons in a proportion of 30-50% by volume,
- a polydimethylsiloxane in a proportion of 10-20% by volume,
- n-octylamine in a proportion less than or equal to 0.08% by volume,
- water in a proportion between 0 and 0.15% by volume.

**2.** The product for protecting concrete and any other porous building material according to claim 1, further containing in its formulation particles with a SiOz content equal to or greater than 80%.

**3.** The product for protecting concrete and any other porous building material according to claim 1, wherein:

- the alkyl triethoxysilane is propyl triethoxysilane in a proportion of 45% with respect to the total volume of the sol

- the oligomeric ethyl silicate is a mixture of ethyl silicates that generates 41% silica after its complete reaction and the average chain size of which is 5 units
- the polydimethylsiloxane has a viscosity of about 60 mPa s, an average degree of polymerization of 58, the chain ends of which end in hydroxyl groups and is in a proportion of 10% with respect to the total volume of the sol
- n-octylamine is added in a proportion of 0.08% with respect to the total volume of the sol
- the water is incorporated in a proportion of 0.15% with respect to the total volume of the sol.

**4.** The product for protecting concrete and any other porous building material according to claims 2 and 3, wherein the particles are hydrophilic SiOz nanoparticles with an average size of 40 nm and a specific surface area of 50 $m^2 \cdot g^{-1}$, in a proportion of 5% by weight with respect to the total volume of the sol.

**5.** Use of the product for protecting concrete and other porous building materials according to the claims, to provide the material with a substantial reduction in water absorption and protection against aggressive environmental conditions, without the treatment producing color changes in the substrate perceptible to the human eye.

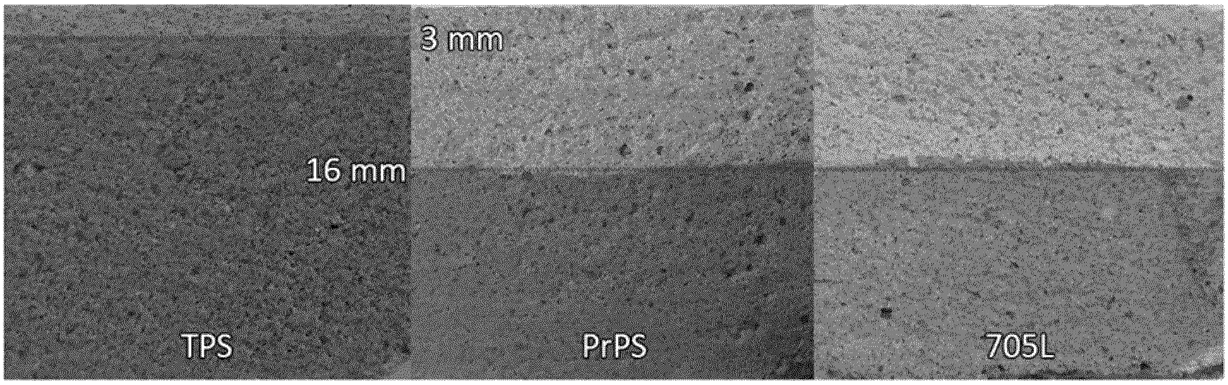


FIGURE 1

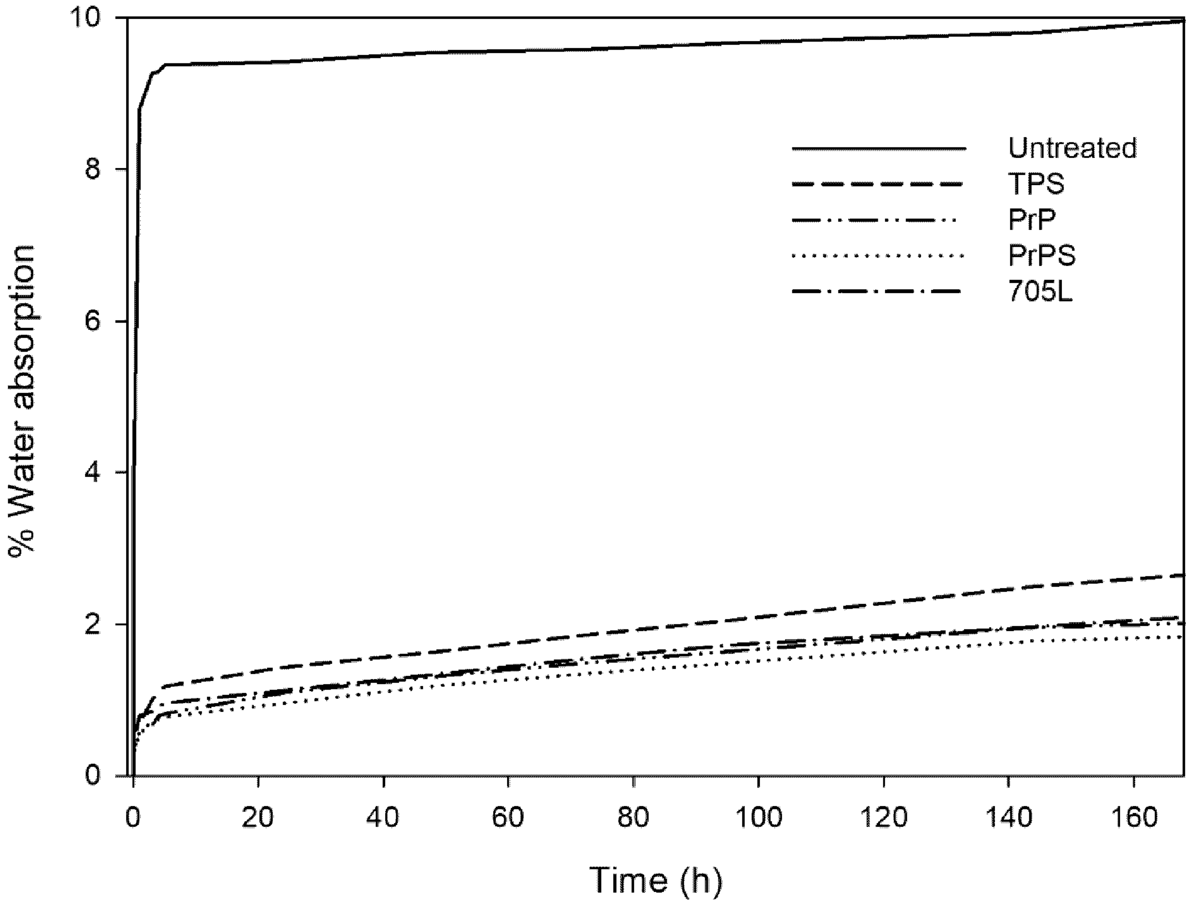


FIGURE 2

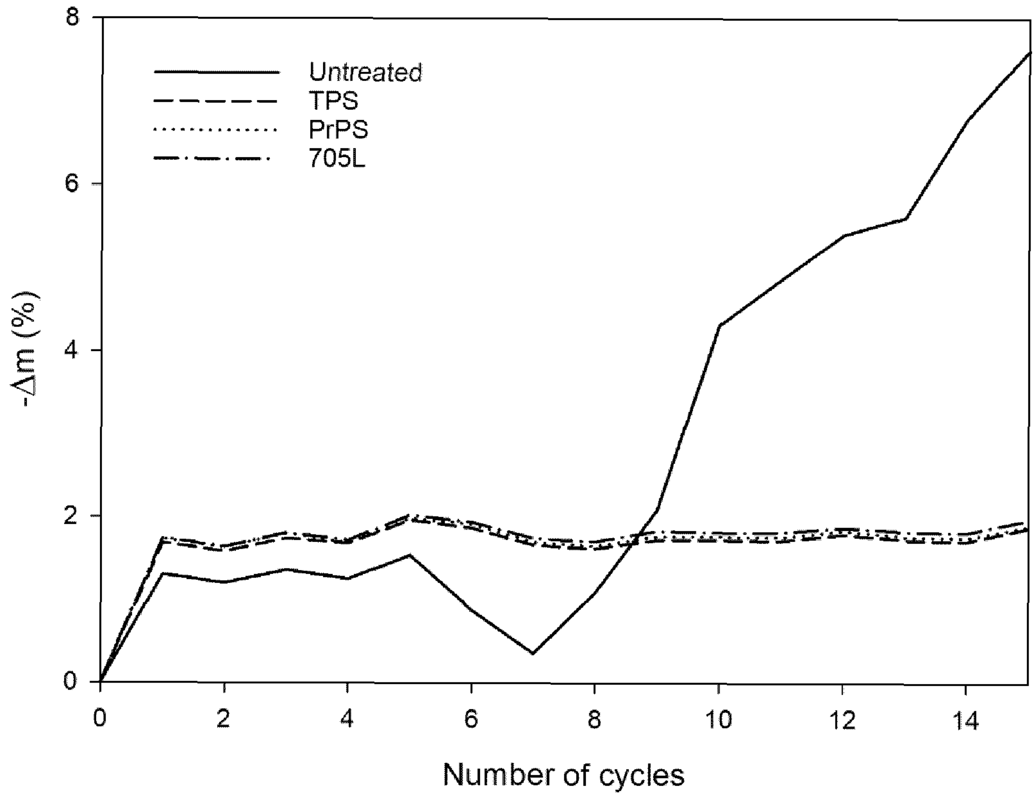


FIGURE 3

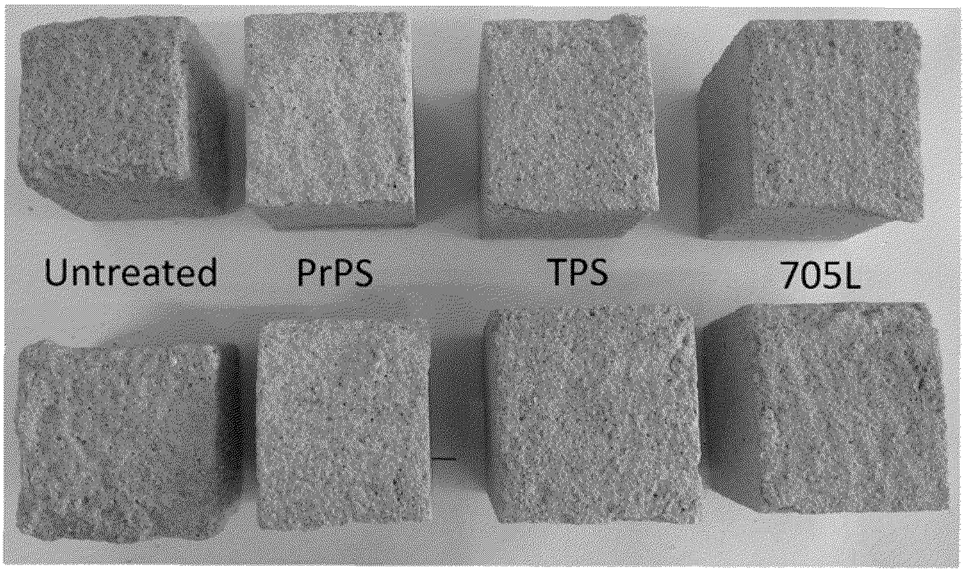


FIGURE 4

# INTERNATIONAL SEARCH REPORT

International application No.
PCT/ES2021/070908

A. CLASSIFICATION OF SUBJECT MATTER

***C09D183/00*** (2006.01)
***C08G77/18*** (2006.01)
According to International Patent Classification (IPC) or to both national classification and IPC

B. FIELDS SEARCHED

Minimum documentation searched (classification system followed by classification symbols)
C09D, C08G

Documentation searched other than minimum documentation to the extent that such documents are included in the fields searched

Electronic data base consulted during the international search (name of data base and, where practicable, search terms used)

EPODOC, INVENES

C. DOCUMENTS CONSIDERED TO BE RELEVANT

| Category* | Citation of document, with indication, where appropriate, of the relevant passages | Relevant to claim No. |
|---|---|---|
| A | CARRASCOSA LUIS A M et al.. A Simple, Long-Lasting Treatment for Concrete by Combining Hydrophobic Performance with a Photoinduced Superhydrophilic Surface for Easy Removal of Oil Pollutants.. Acs Applied Materials & Interfaces United States 29 Apr 2020., 29/04/2020, Vol. 12, Nº 17, pages 19974 - 19987 [on line][retrieved on 06/11/2020]. ISSN 1944-8252 (Electronic), <DOI: 10.1021/acsami.0c03576 pubmed:32255611> Experimental section, pages 19975 - 19976; | 1-5 |
| A | JP H06172677 A (TOYO INK MFG CO) 21/06/1994, Paragraphs [0004 - 0005]; examples; claims 1-2; | 1-5 |

☒ Further documents are listed in the continuation of Box C. ☒ See patent family annex.

* Special categories of cited documents:
"A" document defining the general state of the art which is not considered to be of particular relevance.
"E" earlier document but published on or after the international filing date
"L" document which may throw doubts on priority claim(s) or which is cited to establish the publication date of another citation or other special reason (as specified)
"O" document referring to an oral disclosure use, exhibition, or other means.
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other documents , such combination being obvious to a person skilled in the art
"&" document member of the same patent family

| Date of the actual completion of the international search | Date of mailing of the international search report |
|---|---|
| 18/05/2022 | **(19/05/2022)** |
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>J. Peces Aguado<br><br>Telephone No. 91 3496870 |

Form PCT/ISA/210 (second sheet) (January 2015)

## INTERNATIONAL SEARCH REPORT

International application No.
PCT/ES2021/070908

| C (continuation). | DOCUMENTS CONSIDERED TO BE RELEVANT | |
|---|---|---|
| Category * | Citation of documents, with indication, where appropriate, of the relevant passages | Relevant to claim No. |
| A | CN 106634241 A (SEPCO1 ELECTRIC POWER CONSTRUCTION CORP) 10/05/2017, paragraph [0007]; paragraphs [0013 - 0017]; | 1-5 |

Form PCT/ISA/210 (continuation of second sheet) (January 2015)

## INTERNATIONAL SEARCH REPORT

Information on patent family members

International application No.
PCT/ES2021/070908

| Patent document cited in the search report | Publication date | Patent family member(s) | Publication date |
|---|---|---|---|
| CN106634241 A | 10.05.2017 | NONE | |
| JPH06172677 A | 21.06.1994 | JP2738248B B2 | 08.04.1998 |
| | | EP0594440 A1 | 27.04.1994 |
| | | EP0594440 B1 | 28.05.1997 |
| | | DE69311055T T2 | 11.09.1997 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- ES 2265298
- ES 2423356 B2
- ES 2388843

### Non-patent literature cited in the description


- **MOSQUERA MJ ; DE LOS SANTOS VALDEZ-CASTRO, L ; MONTES, A.** *Langmuir,* 2008, vol. 24, 2772
- **J.F. ILLESCAS ; M.J. MOSQUERA.** *J. Phys. Chem. C.,* 2011, vol. 115, 14624-14634
- **D.S. FACIO ; M.J. MOSQUERA.** *ACS Appl. Mater. Interfaces.,* 2013, vol. 5, 7517-7526
- *CHEMICAL ABSTRACTS,* 11099-06-2
- **R. ZARZUELA ; M. LUNA ; L.M. CARRASCOSA ; M.P. YESTE ; I. GARCIA-LODEIRO ; M.T. BLANCO-VARELA ; M.A. CAUQUI ; J.M. RODRÍGUEZ-IZQUIERDO.** *Cem. Concr. Res.,* 2020, vol. 130, 106008
- *CHEMICAL ABSTRACTS,* 70131-67-8
- *CHEMICAL ABSTRACTS,* 111-86-4
- **J.D. RODRIGUES ; A. GROSSI.** *J. Cult. Herit.,* 2007, vol. 8, 32-43
- **A. CALLIA ; M. LETTIERI ; M. MASIERI ; S. PAL ; A. LICCIULLI ; V. ARIMA.** *J. Clean. Prod.,* 2017, vol. 165, 1036-1047